# EUROPÄISCHE PATENTSCHRIFT

(11) **EP 0 415 260 B1**
(45) Veröffentlichungstag und Bekanntmachung des Hinweises auf die Patenterteilung: **30.03.1994**
(21) Anmeldenummer: 90116105.9
(22) Anmeldetag: 22.08.1990
(51) Int. Cl.: F16L 41/02, F24D 3/10

(54) **Heizungs- bzw. Kesselverteiler**
Heating and/or boiler distributor
Distributeur de chauffage ou de bouilloire

(30) Priorität: 30.08.1989 DE 3928731
(43) Veröffentlichungstag der Anmeldung: 06.03.1991
(73) Patentinhaber: Strawa Metallverarbeitungs GmbH, D-73337 Bad Ueberkingen (DE)
(72) Erfinder: Drljevic, Milutin, D-73337 Bad Überkingen-Oberböhringen (DE)
(74) Vertreter: Materne, Jürgen, Dr.

(56) Entgegenhaltungen:
- DE-A- 2 748 673
- DE-A- 3 012 854

## Beschreibung

Die Erfindung bezieht sich auf einen aus baukastenmäßig vorgefertigten Gehäuse-Grundeinheiten und mit mehreren fest angebrachten Abgangsstutzen derselben Nennweite versehenen Heizungs- bzw. Kesselverteiler, vornehmlich für Großanlagen.

Aus der DE-PS 27 41 727 ist ein Verteiler bekannt, bei dem die abgehenden Leitungsanschlüsse als in einer Reihe liegende, kegelstumpfförmige Rohrstutzen ausgebildet sind; auf der Mantelfläche der Leitungsanschlüsse sind dabei in vorbestimmten Längsabständen Markierungen angebracht, deren Lage auf den Kegelwinkel der Leitungsanschlüsse abgestimmt ist. Die Abstimmung ist so gewählt, daß beim Ablängen eines Rohrstutzens längs einer Markierung sich eine derartige restliche Höhe des Rohrstutzens und am oberen Ende ein derartiger Öffnungsquerschnitt ergibt, daß beim Aufsetzen einer Pumpe oder eines Ventiles mit genormten Abmessungen (Bauhöhe und Anschlußquerschnitt) das Betätigungsorgan oder die Mitte dieses Geräts in der gleichen Höhe über dem Verteilergehäuse liegt, wie beim Aufsetzen eines entsprechend kleineren Geräts auf die nicht abgelängten Rohrstutzen. Zwar sind die Rohrstutzen höher, jedoch ist ihr Öffnungsquerschnitt kleiner und so auf den Anschlußquerschnitt des anzusetzenden Geräts abgestimmt, daß die Bauhöhe des Geräts von der Anschlußstelle bis zur Mittelhöhe oder Betätigungsebene des Geräts wieder die gleiche Gesamthöhe wie bei einem größeren, an den abgelängten Rohrstutzen angesetzten Gerät ergibt. Durch entsprechende Wahl des Kegelwinkels und der Markierungsabstände läßt sich so eine äußerst zweckmäßige und fehlersichere Montage des Rohrverteilers erreichen. Auf die äußeren Enden des Rohrstutzens können hierbei entweder Anschlußflansche oder Anschlußgewinde aufgeschweißt sein.

Der Nachteil bei dieser zuvor beschriebenen Ausführung liegt vor allem in den hier noch notwendigen Montagearbeiten auf der Baustelle.

Aus der DE-A-3 012 854 ist ein Rohrleitungsverteiler nach dem Oberbegriff des Patentanspruchs 1 bekannt. Bei diesem haben die Abgangsstutzen ein Innengewinde und die Rohraufsätze ein Außengewinde, an das sich ein Werkstück-Ansatzbereich anschließt, so daß die Rohraufsätze mittels eines Maulschlüssels oder einer Rohrzange in die Abgangsstutzen eingeschraubt werden. Dieses System ist nur für kleine Nennweiten brauchbar.

Der Erfindung liegt deshalb auch die Aufgabe zugrunde, einen Rohrverteiler, bei welchem die von dem Vorlaufraum und dem Rücklaufraum abzweigenden Leitungsanschlüsse in Längsrichtung miteinander fluchten, zu schaffen, der bei Eignung für große Nennweiten in der Herstellung einfach und damit preisgünstig ist und werkstattmäßig in vollem Umfang vorgefertigt werden kann.

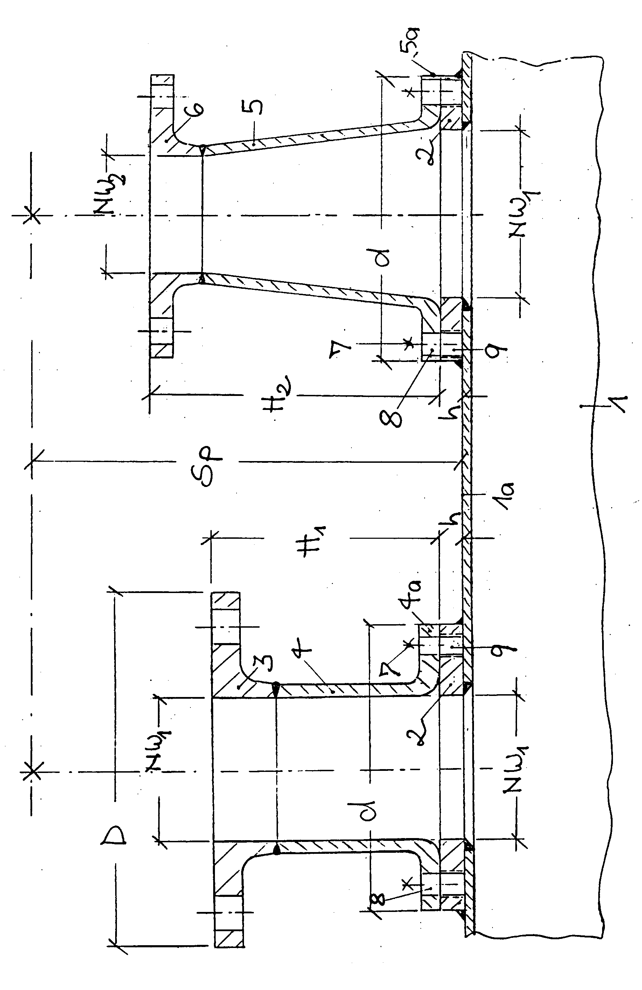

Diese Aufgabe wird bei einem Rohrverteiler der eingangs genannten Gattung erfindungsgemäß gelöst durch die Merkmale des kennzeichnenden Teils des Patentanspruchs 1. Vorteilhafte Ausführungsformen der Erfindung sind in den Unteransprüchen angegeben. Die Zeichnung zeigt einen Längsschnitt durch ein Teilstück des erfindungsgemäßen Verteilers.

Der neue Verteiler besteht aus einem Gehäuse 1 beliebiger Länge und ist mit einer beliebigen Anzahl werkstattmäßig bereits fest angebrachter Abgangsstutzen 2 ein und derselben Grundnennweite "NW1" versehen; vorteilhaft kann es dabei sein, wenn die gehäuseseitigen Abgangsstutzen 2 als rohransatzlose, unmittelbar auf die Gehäuseoberseite la aufgeschweißte Flanschringe 2 in der Form ausgebildet sind, daß sie gleichhohe "h" Industrieflansche, also Sonderflansche mit kleinerem Außendurchmesser "d" als demjenigen "D" von DIN-Flanschen 3 gleicher Nennweite "NW1" darstellen.

Die an diese Abgangsstutzen 2 nun jeweils auf der Baustelle anzuschließenden Rohraufsätze 4, Reduzierstücke 5 o. dgl., besitzen fußseitig ebenfalls entsprechende Sonderflansche 4a bzw. 5a und haben zudem, ebenfalls werkstattmäßig vorgefertigt, eine Bauhöhe "H₁ bzw. H₂", die daran über Normflansche 3 bzw. 6 angeschlossene Armaturen o. dgl. auf dieselbe mittlere Spindelhöhe "Sp" bringt.

Vervollständigt wird das neue System noch dadurch, daß die Sonderflansche 4a und 5a mit ihren Aufsatz- bzw. Reduzierstücken 4 bzw. 5 durch einstückige Ausformung gebildet und über Schrauben 7 mit den Abgangsstutzen 2 verbunden sind, wobei vorzugsweise die oberen Flansche 4a und 5a Durchgangsbohrungen 8 und die zugehörigen Gegenflansche der Abgangsstutzen 2 Gewindelöcher 9 aufweisen.

Im Gegensatz zu allen anderen bislang bekannten Ausführungen ist es durch die vorliegende Erfindung nunmehr auch für Großverteiler mit einer großen Zahl von Abgängen 2 möglich, diese auf einfache Weise herzustellen und ohne Nacharbeitung direkt auf der Baustelle zu komplettieren; hierdurch werden Planungsarbeiten und Lagerhalterung ganz erheblich vereinfacht.

## Patentansprüche

1. Heizungs- bzw. Kesselverteilersystem, vornehmlich für Großanlagen, aus
Gehäuse-Grundeinheiten (1),
mehreren baukastenmäßig vormontiert fest am Gehäuse (1) sitzenden Abgangsstutzen (2) derselben Nennweite (NW₁) und
an diese Abgangsstutzen (2) jeweils angeschlossenen Rohraufsätzen (4, 5)
mit einem Anschluß zur Verbindung mit Armaturen genormter Abmessungen, wobei die Rohraufsätze eine vom Öffnungsquerschnitt (NW₁, NW₂) ihres jeweiligen Anschlusses abhängige Bauhöhe (H1, H2) besitzen, die die daran anzuschließenden Armaturen auf diesselbe mittlere Spindelhöhe (Sp) bringt,
dadurch gekennzeichnet, daß
die Abgangsstutzen (2) als Industrieflansche mit gleicher Höhe (h), also als Sonderflansche mit kleinerem Außendurchmesser (d) als demjenigen (D) von DIN-Normflanschen (3) gleicher Nennweite (NW₁) ausgebildet sind und
die Rohraufsätze (4, 5) fußseitig ebenfalls entsprechende Sonderflansche (4 a, 5 a) und auf der anderen Seite DIN-Normflansche (3, 6) aufweisen.

2. Heizungs- bzw. Kesselverteilersystem nach Anspruch 1, dadurch gekenzeichnet, daß die Sonderflansche (4a,5a) mit den jeweiligen Rohraufsätzen (4,5) durch einstückige Ausformung gebildet und über Schrauben (7) mit den Abgangsstutzen (2) verbunden sind, wobei vorzugsweise die Flansche (4a,5a) der Rohraufsätze Durchgangsbohrungen (8) und die Flansche der Abgangsstutzen (2) Gewindelöcher (9) aufweisen.

3. Heizungs- bzw. Kesselverteiler nach Anspruch 1 oder 2,
**dadurch gekennzeichnet,**
daß die Abgangsstutzen als unmittelbar auf die Gehäuseoberseite ( 1a ) aufgeschweißte Flanschringe ( 2 ) ausgebildet sind.

## Claims

1. A heating and/or boiler distributor, in particular for large-scale installations, made of
casing basic units (1),
a plurality of exit connecting pieces (2) premounted in construction kit manner fixedly attached to the casing (1) having the same nominal diameter (NW₃) and
pipe crowns (4, 5) each coupled to a respective connecting piece,
having a connection for connecting with fittings with standardized dimensions, the pipe crowns having a mounting height (H1, H2) as a function of the opening cross-section (NW₁, NW₂) of their corresponding connection, which causes the fittings to be connected therewith to be on the same mean spindle height (Sp),
characterized in that
the exit connecting pieces (2) are formed as industrial flanges of the same height (h), therefore as special flanges with smaller outer diameters (d) than those (D) of DIN standardized flanges (3) having the same nominal diameter (NW₁), and the pipe crowns (4, 5) have at their base portions also corresponding special flanges (4a, 5a) and at the other side DIN standardized flanges (3, 6).

2. The heating and/or boiler distributor according to claim 1, characterized in that the special flanges (4a, 5a) are formed integrally with the corresponding pipe crowns (4, 5) and are connected by screws (7) with the exit connecting pieces (2), preferably the flanges (4a, 5a) of the pipe crowns comprise through-bores (8) and the flanges of the exit connecting pieces (2) comprise threaded holes (9).

3. The heating and/or boiler distributor according to claim 1 or 2,
characterized in that the exit connecting pieces are formed as flange rings (2) being immediately welded to the casing top (1a).

## Revendications

1. Distributeur pour chauffage ou chaudière, de préférence pour de grandes installations, composé d'unités de base de boîtier (1), de plusieurs tubulures de sortie (2) de même largeur nominale (NW₁) montées à l'avance de façon modulaire sur le boîtier (1) et de raccords de tube (4, 5) raccordés à ces tubulures de sortie (2) avec un raccord pour la liaison avec des appareils de robinetterie de dimensions aux normes, les raccords de tube possédant une hauteur (H1, H2) correspondant à la section d'ouverture (NW₁, NW₂) du raccord correspondant, qui amène les appareils de robinetterie devant y être raccordés à la même hauteur de tige (Sp) moyenne, caractérisé en ce que les tubulures de sortie (2) sont conçues comme des brides industrielles de même hauteur (h), donc comme des brides spéciales avec un diamètre extérieur (d) plus petit que celui (D) des brides aux normes DIN (3) de même largeur nominale (NW₁) et les raccords de tube (4, 5) présentent également des brides spéciales (4a, 5a) à la base et des brides aux normes DIN (3, 6) de l'autre côté.

2. Distributeur pour chauffage ou chaudière selon la revendication 1, caractérisé en ce que les brides spéciales (4a, 5a) sont formées avec les raccords de tube (4, 5) correspondants par moulage d'un seul tenant et reliées par des vis (7) aux tubulures de sortie (2), les brides (4a, 5a) des raccords de tube présentant de préférence des trous traversants (8) et les brides des tubulures de sortie (2) des trous filetés (9).

3. Distributeur pour chauffage ou chaudière selon la revendication 1 ou 2, caractérisé en ce que les tubulures de sortie sont conçues comme des anneaux de bride (2) soudés directement sur la face supérieure (1a) du boîtier.
